# EUROPEAN PATENT SPECIFICATION

(11) **EP 1 871 175 B1**
(45) Date of publication and mention of the grant of the patent: **26.08.2009**
(21) Application number: 06723984.8
(22) Date of filing: 24.03.2006
(51) Int. Cl.: A23G 9/10, A23G 9/16, A23G 9/18, A23L 3/36, A23L 3/375

(54) **METHOD FOR FREEZING A FOOD PRODUCT**
VERFAHREN ZUM TIEFGEFRIEREN EINES NAHRUNGSMITTELPRODUKTS
PROCÉDÉ SERVANT À CONGELER UN PRODUIT ALIMENTAIRE

(30) Priority: 21.04.2005 EP 05252508
(43) Date of publication of application: 02.01.2008
(73) Proprietor: Unilever PLC, London EC4Y 0DY (GB); Unilever N.V., 3013 AL Rotterdam (NL)
(72) Inventor: JARVIS, Daniel Anthony, Unilever R & D Vlaardingen, NL-3133 AT Vlaardingen (NL); JUDGE, David John, Unilever R & D Colworth, Bedford Bedfordshire MK44 1LQ (GB)
(74) Representative: Hugot, Alain
(86) International application number: PCT/EP2006/003026
(87) International publication number: WO 2006/111265

(56) References cited:
- EP-A- 0 941 668
- WO-A1-93/21776
- WO-A1-02/087353
- DE-A1- 19 860 442
- US-A- 1 581 493
- US-A- 3 752 678
- US-A- 4 420 496
- US-A1- 2003 219 517
- LEVINE H.; SLADE L.: 'Principles of Cryostabilization Technology from Structure / Property Relationships of Carbohydrate / Water Systems - a review' CRYO-LETTERS vol. 9, no. 21-63, 1988, CAMBRIDGE,
- LU Q.; ZOGRAFI G.: 'Properties of Citric Acid at the Glass Transition' J. PHARMA. SCI. vol. 86, 1997, page 1374

## Description

### Technical Field of the invention

The present invention relates to a method for freezing food products such as ice cream, water ice or milk shake mixes, vegetables and sauces by contacting the food product with a freezing surface, such as the surface of a mould or a freezer plate. In particular, it relates to a method for reducing the adhesion between the food product and the freezing surface, thereby allowing easier release of the product from the surface.

### Background

Children living in cold climates are taught from an early age that if they let their tongue touch a lamppost on a cold day, their saliva will freeze causing the tongue to adhere to the metal. This phenomenon is also manifested in the production and handling of frozen food products where adhesion to cold surfaces is a problem in many factory processes. Most foods have a high moisture content and when the water at the surface of the food product freezes, it acts as a cementing agent, producing strong adhesion to cold surfaces, such as moulds.

For example, in the production of ice-lollies, a flavoured liquid is poured into moulds which are cooled to low temperature (typically -40°C) so that the flavoured liquid freezes. In order to release frozen lollies from the moulds, the outside of the mould is heated so that the surface of the lolly melts, decreasing adhesion and making removal easier. However the heating step can lead to poor product surface definition, is inefficient in terms of energy usage and reduces the production rate. Similarly, in the production of ice cream stick products, ice cream is extruded from the freezer and a stick is inserted as the ice cream is cut to size. The products are placed onto cold plates on which they are conveyed to a hardening tunnel where freezing is completed. Products are then picked up by their sticks and undergo further process steps, for example dipping in chocolate and packaging. However, the ice cream adheres to the plate, and the adhesion can be so strong that the sticks snap when lifted. To overcome this it is typically necessary to strike the underside of the plate with a hammer in order to release the ice cream. This requires extra factory equipment. A related problem arises in freezing processes for vegetables, such as spinach, where the vegetable material adheres to freezer plates or belts during freezing. Therefore the elimination or reduction of the adhesion is desirable.

One approach to overcome adhesion is to coat the freezing surface (e.g. the inner surface of the mould or the top side of the conveyor plate) with a release agent. For example US 4420496 discloses the use of highly unsaturated oils as release agents. As US 4420496 points out, the release agent must be capable of withstanding cold temperature without significantly congealing or hardening. US 1581493 and US 5358727 disclose the use of ethanol and glycerol respectively as release agents. These release agents are all non-aqueous liquids with low freezing points. Therefore instead of freezing, they form a liquid layer between the freezing surface and the product. The liquid barrier reduces the adhesion. However, release agents are used in large quantities since freezing processes are normally repeated many hundreds or thousands of times per day in a factory. Therefore this approach is expensive.

WO 90/06693 and EP 0582327 disclose methods for freezing a food product on a supporting structure, and for freezing ice-lollies in a mould. In each case, the temperature of the freezing surface in contact with the food product is very low (below -50°C). As a result, the adhesive force between the product and the surface becomes very small and good product release is achieved without the need for a release agent. However in order to reach these very low temperatures, cryogenic liquids are required. These add cost and are inconvenient to handle.

There remains therefore a need for a method of reducing the adhesion between food products and freezing surfaces thereby allowing easier release of the product from the surface, but which does not suffer from the disadvantages of previous methods.

### Tests and Definitions

Unless defined otherwise, all technical and scientific terms used herein have the same meaning as commonly understood by one of ordinary skill in the art (e.g. in frozen food manufacture). Definitions and descriptions of various terms and techniques used in frozen confectionery manufacture are found in "Ice Cream", 6th Edition R.T. Marshall, H.D. Goff and R.W. Hartel, Kluwer Academic / Plenum Publishers, New York 2003.

### Food Products

The term "food product" as used herein includes aqueous solutions and / or suspensions (such as unfrozen ice cream and water ice mixes, yoghurt, and milk shakes), partially frozen ice creams and water ices, vegetables, (for example spinach and cabbage), and sauces (such as bechamel sauce and tomato sauce).

### Tg'

When an aqueous solution freezes, ice is formed. As a result, the amount of unfrozen water in which the solute is dissolved decreases and the solute becomes more concentrated. This is known as freeze-concentration. If the solute does not crystallise out of solution as freezing progresses, the solution eventually becomes so concentrated that it undergoes a transition to a glassy state and does not freeze-concentrate any more. The temperature at which this occurs is the glass transition temperature of the maximally freeze-concentrated solution, known as Tg'. The frozen aqueous solution consists of a mixture of ice crystals and freeze-concentrated glassy phase. The relative amounts of ice and glass depend on the initial solute concentration, but the concentration of the glassy phase (i.e. the maximally freeze-concentrated solution) is independent of the initial solute concentration. Tg' corresponds to the temperature at which the liquidus curve and the glass transition curve intersect on the state diagram (see, for example, C. Clarke, "The Science of Ice Cream", 2004, Royal Society of Chemistry, Cambridge, UK, pp 28-30). Values of Tg' are known in the literature for a wide range of food grade solutes Cryo-Letters 9,1988, pp 46-51. Tg' is measured by the following method.

### Method for measuring Tg'

The Tg' of aqueous solutions is measured by differential scanning calorimetry, as described in S Ablett, MJ Izzard, PJ Lillford, "Differential scanning calorimetric study of frozen sucrose and glycerol solutions" J. Chem. Soc. Faraday Trans., 88 (1992) p789. It should be noted that some solutes have a very low Tg'. It is sufficient for the purposes of the present invention to show by this method that Tg' of such solutes is below -60°C, and it is not necessary to measure the actual value.

### Concentration

It should be understood that references to solute concentrations mean the concentration of the solute before any ice is formed, unless stated otherwise. All concentrations are expressed as % by weight, unless stated otherwise.

### Method for measuring the temperature of a freezing surface

The temperature of a freezing surface is measured with a self-adhesive patch surface temperature probe connected to a thermometer (as supplied by Comark, Stevenage, UK with code N9008).

### Brief description of the invention

We have developed a process that facilitates release of food products from freezing surfaces. The invention requires the presence of a layer of a frozen aqueous solution (which is of a different composition to the food product) between the freezing surface and the food product. We have found, contrary to what had previously been thought, that certain frozen aqueous solutions do not cement food products to cold surfaces, but in fact reduce the adhesion between them, provided that the solute is chosen according to particular criteria. Remarkably, reduced adhesion is obtained with a low solute concentration, for example 1% by weight, or lower. We have found that this allows a food product to be removed easily from a freezing surface without the shortcomings associated with previous methods, such as poor surface definition, or the need for large quantities of release agents or cryogenic liquids.

Accordingly, in a first aspect the present invention provides a method for freezing a food product comprising the steps of:
(a) contacting the food product with a freezing surface, the freezing surface having a temperature of from -10°C to -50°C; and
(b) removing the food product from the freezing surface,
characterised in that in step (a) a layer of a frozen aqueous solution which is of a different composition to the food product is present between the food product and the freezing surface, the solution having a Tg' below -60°C and a solute concentration of from 0.001 to 20% by weight.

In a preferred embodiment the freezing surface is coated with the aqueous solution before it is contacted with the food product. In an alternative embodiment the food product is coated with the aqueous solution before the freezing surface is contacted with it.

Preferably the freezing surface is not subjected to a heating step between step (a) and step (b).

Preferably the solute is food grade solute, for example an alcohol or a polyol. More preferably the solute is selected from the group consisting of ethanol, glycerol, propylene glycol, and mixtures thereof. Even more preferably the solute is ethanol and / or glycerol.

Preferably the solute concentration is at least 0.01 %, more preferably at least 0.05% by weight. Preferably the solute concentration is at most 10%, more preferably at most 5% by weight.

In a preferred embodiment the solute is ethanol with a concentration of from 0.05 to 1 % by weight.

Preferably the layer of frozen aqueous solution is at least 0.1mm, more preferably at least 0.3mm, most preferably at least 0.5mm in thickness. Preferably the layer is at most 5mm, more preferably at most 3mm, most preferably at most 2mm in thickness.

Preferably the temperature of the moulding surface is -15°C or below, more preferably - 25°C or below, most preferably -30°C or below. Preferably the temperature of the moulding surface is -45°C or above, more preferably -40°C or above.

Preferably the freezing surface is made of a metal, such as stainless steel or aluminium.

In a preferred embodiment the food product is a frozen confection, such as ice cream, or an unfrozen mix for a frozen confection. In another embodiment the food product is a vegetable product or a sauce.

In a second aspect the present invention provides the use of an aqueous solution having Tg' below -60°C and a solute concentration of from 0.001 to 20% by weight to reduce adhesion between a food product and a freezing surface having a temperature of from - 10°C to -50°C.

### Detailed Description

It has been found that when a layer of an aqueous solution having Tg' below -60°C and a solute concentration of from 0.001 to 20% by weight is present between a food product and a freezing surface having a temperature from -10°C to -50°C, the adhesion between the freezing surface and the food product is reduced. The table lists examples of solutes which (in aqueous solution) have Tg' below -60°C.

| **Class** | **Solute** | **Tg' (°C)** | **Reference** |
|---|---|---|---|
| Alcohols | ethanol | -178 | C |
| | propylene glycol | -67.5 | D |
| | | | |
| Polyols | glycerol | -95 | B |

| | | | |
|---|---|---|---|
| B S. Ablett et al., J. Chem. Soc. Faraday Trans. 88 (1992) p789 C M.A. Miller et al, Phys. Rev. B 57 (1998) p22 D H. Levine, L. Slade, Cryo-Letters 9 (1988) p21 | | | |

The lower the value of Tg', the lower the adhesion. Preferably Tg' is below -70°C, more preferably below -80°C. Ethanol and glycerol have particularly low Tg' values and are therefore particularly effective solutes. Preferably the temperature of the freezing surface at least 20°C higher than the Tg'. Thus when a freezing surface temperature at the lower end of the range is used, the greatest reduction in adhesion is obtained by choosing a solute with a Tg' of below -70°C.

Solutes that crystallize out of solution and form eutectic mixtures (rather than undergoing a glass transition) when freeze-concentrated, for example sodium chloride, are not suitable for the present invention. However a solute which undergoes a glass transition (e.g. a sugar) may be combined with a solute that crystallizes out of solution (e.g. a salt). A mixed solution of the solutes is suitable for the present invention provided that this mixed solution has Tg' below -60°C.

Reduced adhesion is achieved at as long as the solute concentration is above a minimum value. An advantage of the present invention is that this minimum concentration is very low, thus the solution comprises almost entirely water. The present invention uses much less solute than previously known release agents, which typically comprise little or no water (for example 100% glycerol). A further advantage is that because the solute concentration is very low, it does not matter that some of the layer of frozen aqueous solution remains on the surface of the food product after release from the freezing surface. If the solute concentration is high, the frozen solution that remains on the surface of the food product can affect the flavour of the food product. In particular, glycerol has a very noticeable off taste which consumers do not like. Thus if the solute is glycerol, it is preferred that the solute concentration is not at the top of the concentration range.

The aqueous solution may be applied to the freezing surface or to the surface of the food product. Any suitable method may be used to apply the solution, for example by spraying, brushing, or filling a cold mould so that a solid layer forms on its inner surface and then sucking out the excess solution. Filling and sucking is specially suitable for producing relatively thick layers.

To achieve optimum adhesion reduction it is preferable to choose (within the ranges specified) a relatively thick layer when a very low solute concentration is used, and a relatively high solute concentration when a very thin layer is used.

It is important that the layer of frozen aqueous solution does not completely melt after application, for example when the food product makes contact with it. This depends on factors such as the temperature and amount of the food product, the thickness of the layer, the temperature and nature of the freezing surface and the overall heat transfer properties. A certain amount of melting can be tolerated, but the layer must not melt completely. Thick layers are less prone to melting than thin ones, but require more solution and reduce the rate of heat transfer from the product to the freezing surface.

The reduced adhesion due to the presence of the frozen aqueous layer means that a heating step is not required between contacting the food product with the freezing surface and removing the food product from it. By a heating step is meant a step in which some of the frozen aqueous layer is melted by the application of heat to the freezing surface. The disadvantages inherent in a heating step, such as poor product surface definition, increased energy usage and reduced production rate are thereby avoided.

The present invention may be applied in any suitable process in the production or handling of frozen food products, such as freezing in moulds or conveying products (including unfrozen or partially frozen products). Suitable freezing surfaces include moulds (which may comprise a single piece or two or more pieces which are assembled to form the mould), plates, solid or wire mesh conveyor belts, freezing trays, elevator buckets, tubs and the like. In many such processes, the steps are repeatedly performed in a cycle. Thus for example in an ice lolly production process the mould is filled with mix, which is then frozen, and the lolly is removed; then the next cycle begins and the mould is filled again. In such processes it is necessary that the layer of frozen aqueous solution of the invention is present in each cycle.

The food product may be a liquid, semi-solid or solid, and may be unfrozen or partially frozen. The freezing surface may be concave, for example the inner surface of a mould or a corrugated belt, or flat such as a plate, which may for example form part of a conveyor. The food product should be in contact with the freezing surface long enough for it to achieve sufficient cohesive strength so that the product itself does not fail when it is removed from the surface.

The present invention will now be further described with reference to the following examples, which are illustrative only and non-limiting.

### Examples

### Example 1: Ice Lolly Moulds

The effects of layers of frozen aqueous solutions of ethanol and glycerol were determined as follows. Stainless steel ice lolly moulds were placed in a brine bath and allowed to equilibrate so that the mould surface temperature was -25°C. The moulds were coated by filling them with the solution, which began to freeze on the inner surface of the mould. Then unfrozen liquid was sucked out from the centre of the mould, resulting in a layer approximately 2mm thick. Solutions of 2.5%, 5% and 10% w/w glycerol and 0.1, 1 and 5% w/w ethanol were used. The layer was left for 20 minutes to ensure that it had fully solidified, and then the mould was filled with a 10% w/w sucrose solution at 5°C. The products were frozen for a further 45 minutes, during which time sticks were inserted. It was attempted to remove the frozen lollies from the moulds by lifting them by their sticks. The example was repeated but without using ethanol or glycerol solutions to coat the moulds.

Lollies in moulds which had not been coated with a layer of frozen aqueous solution could not be de-moulded at -25°C. The moulds had to be warmed up by placing them in a bath of glycol at +20°C for a few seconds before the lollies could be de-moulded. All of the lollies in moulds which had been coated could be de-moulded by hand at -25°C. It was slightly easier to remove the lollies from the moulds which had been coated with ethanol solution. It was evident that the layers of frozen aqueous ethanol and glycerol solutions significantly reduced the adhesion of the lollies to the moulds, thus removing the need for a warming step.

### Example 2: Split Moulds

Split moulds consist of two or more separate parts and are used to produce 3-D shapes. A simple mould was used, consisting of two aluminium pieces each with a cavity. The mould pieces were cooled by flowing cold glycol through channels in them. Once the mould temperature had equilibrated to -25°C, a layer of 1% w/w ethanol solution was sprayed onto the cavity of each mould piece using an artists' air brush. A small amount of red food colouring had been added to the solution so that the coating layer could be clearly seen. The solution was left to solidify for 5 minutes. The two halves of the mould were placed together so that the cavities defined the shape of an ice lolly. A stick was placed into a slot in the mould. A standard ice cream mix was prepared by conventional techniques and processed in an ice cream freezer. Partially frozen ice cream (60% overrun) at -5°C was injected into the mould and left to harden for one hour. This step is included because the ice cream is still relatively soft and would undergo cohesive failure if it were attempted to remove it from the mould without hardening. The example was repeated without using the ethanol solution.

The products were then demoulded by first lifting off the top half of the mould by hand and then picking up the ice cream by the stick. Without the layer of frozen ethanol solution, the top half could not be easily lifted off. It was necessary to lever it away from the bottom half and some of the ice cream stuck to it. When the stick was picked up, the remaining ice cream fractured so that some ice cream came away with the stick while the rest stuck to the bottom half of the mould. With the coated moulds, the top half of the mould could be easily picked up and the ice cream lifted cleanly from the bottom half without fracturing. Some of the coating layer came away with the ice cream and some stuck to the mould. Again, it was evident that the layer of frozen aqueous ethanol solution significantly reduced the adhesion of the ice cream to the moulds.

### Example 3: Conveyor Plates

Stainless steel plates were placed in a blast freezer -35°C and allowed to equilibrate for 1 hour. The plates were removed from the freezer and a layer of ethanol solution (0.1 or 1% w/w) was applied onto their upper surfaces. A small amount of red food colouring had been added to the solution so that the coating layer could be clearly seen. Two methods were used: brushing with a pastry brush and spraying with either an artists' air brush or an atomising spray (Spraying Systems Limited, Farnham, UK) running at a pressure of 3 bar off a compressed air line. A standard ice cream mix was prepared by conventional techniques and frozen in an ice cream freezer. Partially frozen ice cream (60% overrun) was extruded from the freezer at approximately -7°C and cut into pieces with a cutting wire. The pieces dropped onto the cold plates as they passed under the extrusion nozzle on a conveyor belt. Sticks were inserted into the ice cream. After each plate had been loaded with an ice cream piece it was returned to the blast freezer at -35°C. This step is included because the ice cream is still relatively soft and would undergo cohesive failure if it were attempted to remove it from the plate at this stage. The example was repeated with the coating applied to the underside of the ice cream instead of the plate. This was achieved by applying the coating to the top of the ice cream after it had been extruded and cut. The ice cream was then flipped onto the cold plate. The example was also repeated without coating either the plate or the ice cream.

After 1 hour at -35°C, products were lifted from the plates by their sticks. The ice creams could be lifted from both the brush coated and spray coated plates. Spray coating was the more effective, and considerably less of the layer of frozen ethanol solution came away with the ice cream than was the case for the brush coated plates. In each case there was little difference between the 0.1 and 1 % solutions. Spraying the ethanol onto the ice cream reduced the adhesion to the plate, but this method was not as effective as coating the plates. In the absence of a layer of frozen ethanol solution, the ice cream stuck very firmly to the uncoated plates and could not be lifted even after banging them on a table. In some cases the sticks in the uncoated samples snapped since the adhesion was so strong. Again, it was evident that the layer of frozen aqueous ethanol solution significantly reduced the adhesion of the ice cream to the plates.

## Claims

1. A method for freezing a food product comprising the steps of:
(a) contacting the food product with a freezing surface, the freezing surface having a temperature of from -10°C to -50°C; and
(b) removing the food product from the freezing surface,
**characterised in that** in step (a) a layer of a frozen aqueous solution which is of a different composition to the food product is present between the food product and the freezing surface, the solution having a Tg' below -60°C and a solute concentration of from 0.001 to 20% by weight.

2. A method according to claim 1 wherein the freezing surface is coated with the aqueous solution before it is contacted with the food product.

3. A method according to claim 1 wherein the food product is coated with the aqueous solution before the freezing surface is contacted with it.

4. A method according to any preceding claim wherein the freezing surface is not subjected to a heating step between step (a) and step (b).

5. A method according to any preceding claim wherein the solute is selected from the group consisting of ethanol, glycerol, propylene glycol and mixtures thereof.

6. A method according to claim 5 wherein the solute is ethanol and / or glycerol.

7. A method according to any preceding claim wherein the solute concentration is from 0.01% to 10% by weight.

8. A method according to any preceding claim wherein the layer of frozen aqueous solution is from 0.1mm to 5mm in thickness.

9. A method according to claim 8 wherein the layer of frozen aqueous solution is from 0.5mm to 2mm In thickness.

10. A method according to any preceding claim wherein the temperature of the freezing surface is from -15°C to -45°C.

11. A method according to any preceding claim wherein the food product is a frozen confection or an unfrozen mix for a frozen confection.

12. Use of an aqueous solution having Tg' below -60°C and a solute concentration of from 0.001 to 20% by weight to reduce adhesion between a food product and a freezing surface having a temperature of from -10°C to -50°C.

## Patentansprüche

1. Verfahren zum Gefrieren eines Nahrungsmittelprodukts, umfassend die Schritte:
(a) In-Kontakt-Bringen des Nahrungsmittelprodukts mit einer Gefrieroberfläche, wobei die Gefrieroberfläche eine Temperatur von -10 °C bis -50 °C hat, und
(b) Entfernen des Nahrungsmittelprodukts von der Gefrieroberfläche,
**dadurch gekennzeichnet, dass** in Schritt (a) eine Schicht einer gefrorenen wässrigen Lösung, die eine andere Zusammensetzung als das Nahrungsmittelprodukt hat, zwischen dem Nahrungsmittelprodukt und der Gefrieroberfläche vorhanden ist, wobei die Lösung eine Tg' von unter -60 °C und eine Konzentration an gelöster Substanz von 0,001 bis 20 Gewichts-% hat.

2. Verfahren gemäß Anspruch 1, wobei die Gefrieroberfläche mit der wässrigen Lösung beschichtet wird, bevor diese mit dem Nahrungsmittelprodukt in Kontakt gebracht wird.

3. Verfahren gemäß Anspruch 1, wobei das Nahrungsmittelprodukt mit der wässrigen Lösung beschichtet wird, bevor die Gefrieroberfläche mit ihm in Kontakt gebracht wird.

4. Verfahren gemäß einem vorangehenden Anspruch, wobei die Gefrieroberfläche zwischen Schritt (a) und Schritt (b) keinem Erwärmungsschritt unterworfen wird.

5. Verfahren gemäß einem vorangehenden Anspruch, wobei die gelöste Substanz aus der Gruppe, bestehend aus Ethanol, Glycerin, Propylenglykol und Gemischen davon, ausgewählt wird.

6. Verfahren gemäß Anspruch 5, wobei die gelöste Substanz Ethanol und/oder Glycerin ist.

7. Verfahren gemäß einem vorangehenden Anspruch, wobei die Konzentration an gelöster Substanz 0,01 Gewichts-% bis 10 Gewichts-% ist.

8. Verfahren gemäß einem vorangehenden Anspruch, wobei die Schicht aus gefrorener wässriger Lösung eine Dicke von 0,1 mm bis 5 mm hat.

9. Verfahren gemäß Anspruch 8, wobei die Schicht aus gefrorener wässriger Lösung eine Dicke von 0,5 mm bis 2 mm hat.

10. Verfahren gemäß einem vorangehenden Anspruch, wobei die Temperatur der Gefrieroberfläche von -15 °C bis -45 °C ist.

11. Verfahren gemäß einem vorangehenden Anspruch, wobei das Nahrungsmittelprodukt ein gefrorenes Süßwarenprodukt oder eine ungefrorene Mischung für ein gefrorenes Süßwarenprodukt ist.

12. Verwendung einer wässrigen Lösung, die eine Tg' von unter -60 °C und eine Konzentration an gelöster Substanz von 0,001 bis 20 Gewichts-% hat, um die Adhäsion zwischen einem Nahrungsmittelprodukt und einer Gefrieroberfläche, die eine Temperatur von -10 °C bis -50 °C hat, zu verringern.

## Revendications

1. Procédé destiné à congeler un produit alimentaire comprenant les étapes consistant à :
(a) mettre en contact le produit alimentaire avec une surface de congélation, la surface de congélation ayant une température comprise entre - 10°C et - 50°C ; et
(b) retirer le produit alimentaire de la surface de congélation,
**caractérisé en ce que** dans l'étape (a) une couche d'une solution aqueuse gelée dont la composition est différente de celle du produit alimentaire, est présente entre le produit alimentaire et la surface de congélation, la solution ayant une Tg' inférieure à - 60°C et une concentration en soluté comprise entre 0,001 et 20 % en poids.

2. Procédé selon la revendication 1, dans lequel la surface de congélation est enduite de la solution aqueuse avant d'entrer en contact avec le produit alimentaire.

3. Procédé selon la revendication 1, dans lequel le produit alimentaire est enduit de la solution aqueuse avant que la surface de congélation n'entre en contact avec celui-ci.

4. Procédé selon l'une quelconque des revendications précédentes, dans lequel la surface de congélation n'est pas soumise à une étape de chauffage entre l'étape (a) et à l'étape (b).

5. Procédé selon l'une quelconque des revendications précédentes, dans lequel le soluté est sélectionné dans le groupe constitué par l'éthanol, le glycérol, le propylèneglycol et des mélanges de ces derniers.

6. Procédé selon la revendication 5, dans lequel le soluté est l'éthanol et/ou le glycérol.

7. Procédé selon l'une quelconque des revendications précédentes, dans lequel la concentration du soluté est comprise entre 0,01 % et 10 % en poids.

8. Procédé selon l'une quelconque des revendications précédentes, dans lequel l'épaisseur de la couche de solution aqueuse gelée est comprise entre 0,1 mm et 5 mm.

9. Procédé selon la revendication 8, dans lequel l'épaisseur de la couche de solution aqueuse gelée est comprise entre 0,5 mm et 2 mm.

10. Procédé selon l'une quelconque des revendications précédentes, dans lequel la température de la surface de congélation est comprise entre -15°C et -45°C.

11. Procédé selon l'une quelconque des revendications précédentes, dans lequel le produit alimentaire est une pâtisserie congelée ou un mélange non congelé pour une pâtisserie congelée.

12. Utilisation d'une solution aqueuse ayant une Tg' inférieure à -60°C et une concentration en soluté comprise entre 0,001 et 20 % en poids de manière à réduire l'adhérence entre un produit alimentaire et une surface de congélation ayant une température comprise entre -10°C et -50°C.
